# EUROPÄISCHE PATENTSCHRIFT

(11) **EP 2 426 096 B1**
(45) Veröffentlichungstag und Bekanntmachung des Hinweises auf die Patenterteilung: **08.04.2015**
(21) Anmeldenummer: 10008913.5
(22) Anmeldetag: 27.08.2010
(51) Int. Cl.: C04B 40/06

(54) **Trockenmörtel aus Lehmtrockenmörtel und einem Naturgraphit, expandierten Graphit und/oder Ruß beinhaltenden Zuschlagstoff**
Dry mortar comprising adobe dry mortar and a natural graphite, expanded graphite and/or aggregate containing carbon black
Mortier sec composé d'un mortier sec à l'argile et d'une matière supplémentaire comprenant un graphite naturel, un graphite et/ou de la rouille expansés

(43) Veröffentlichungstag der Anmeldung: 07.03.2012
(73) Patentinhaber: Bühler, Astrid, 72336 Balingen (DE)
(72) Erfinder: Herberg, Dirk, 46485 Wesel (DE); Landenberger, Hans, 72501 Gammertingen (DE)
(74) Vertreter: Pfister, Stefan Helmut Ulrich

(56) Entgegenhaltungen:
- EP-A2- 1 065 451
- CH-B1- 698 623
- DE-A1- 10 122 472
- DE-A1- 10 306 473
- DE-U1- 9 100 684
- KR-A- 20020 009 249
- KR-A- 20030 042 545
- US-A- 3 404 061

## Beschreibung

Die Erfindung betrifft
- einen Trockenmörtel zur Herstellung von Gebäudebauelementen, Wärmespeichern, Wärmetauschern, Spachtelmassen, flächigen Platten oder Belägen wie Putzen, welcher einen Zuschlagstoff enthält,
- ein Gebäudebauelement, einen Wärmespeicher, einen Wärmetauscher, eine Spachtelmasse, eine flächige Platte oder einen Belag, insbesondere einen Putz, hergestellt auf der Basis eines solchen Trockenmörtels,
- ein Bauwerk oder ein Gebäude, welches mit wenigstens einem solchen Gebäudebauelement, einem solchen Wärmespeicher, einem solchen Wärmetauscher, einer solchen Spachtelmasse, einer solchen flächigen Platte oder einem solchen Belag versehen ist
gemäß den nebengeordneten Ansprüchen.

Bei Bauwerken kommen aus Trockenmörtel hergestellte Gebäudebauelemente meist in Form von quaderförmigen Bausteinen und Bauelementen sowie flächigen Platten vor, woraus Gebäudewände und -decken sowie Innen- oder Außenausbauten wie etwa Kamine oder Kaminbausteine gefertigt werden können. Im folgenden sollen Innen- und Außenausbauten von Gebäuden als Bestandteile des Gebäudes selbst verstanden werden.

Aus Trockenmörtel hergestellte flächige Beläge kommen in Form von Putz oder Verputz vor, womit man einen Belag aus Putzmörtel bezeichnet, der an Außen- und/oder Innenwänden sowie Decken eines Gebäudes oder Bauwerks angebracht wird. Grundsätzlich teilt man Putze in die Kategorien Dickschicht- und Dünnschichtputze ein. Je nach Einsatzart erfüllt der Putz verschiedene Zwecke wie beispielsweise die Herstellung eines glatten Untergrundes zum Fliesen, Streichen oder Tapezieren, Regulierung der Raumfeuchte bei Innenputzen, Wärmedämmung und Wasserabweisung bei Außenputzen und die Herstellung eines ästhetischen Erscheinungsbildes.

Putzmörtel entsteht durch Einmischen von Trockenmörtel in eine Flüssigkeit, meist Wasser, wodurch ein streichfähiger Putzmörtel erzeugt wird, der dann auf Innen- und Außenwände bzw. Decken eines Gebäudes oder Bauwerks aufgetragen wird.

Heutzutage reagiert ein Teil der Bevölkerung sensibel im Hinblick auf "Elektrosmog". Dieser Begriff ist ein Ausdruck für das Vorkommen künstlicher elektrischer, magnetischer und elektromagnetischer Felder in unserer Umgebung im Zusammenhang mit gesundheitlichen Beeinträchtigungen. Elektrosmog meint alle künstlichen Felder, die uns im Wohn- und Arbeitsumfeld umgeben und für die der Mensch kein natürliches Wahrnehmungsorgan besitzt:
- magnetische Gleichfelder
- elektrische Gleichfelder
- elektrische Wechselfelder
- magnetische Wechselfelder
- elektromagnetische Wellen.

Was die Quellen von Elektrosmog betrifft, so unterscheidet man zwischen Immissionen und Emissionen. Immissionen sind von außen insbesondere auf Gebäude einwirkende Felder, beispielsweise von Fernsehsendern, Mobilfunkmasten, Radaranlagen, Rundfunksendern, Öffentliche Stromversorgung, Hausversorgungsleitungen, Erdkabel, Trafostationen, Straßenbahnen. Emissionen betreffen von Haushaltsgeräten erzeugte Felder wie von Fernsehern, Radiogeräte, Monitoren, Mobilfunkgeräten, schnurlose Telephone, Stromkabeln und Elektroinstallation etc..

Somit ist der sich in Gebäuden aufhaltende Mensch einer vielfältigen Strahlenbelastung ausgesetzt, insbesondere der auf der Elektrifizierung basierenden Strahlung. In der DIN/VDE 0848 (Sicherheit in elektromagnetischen Feldern) sind zulässige Grenzwerte für Elektrosmog aufgeführt.

Das Problem dieser Grenzwerte besteht darin, dass durch deren Einhaltung alleine nicht ausgeschlossen werden kann, dass auf den Organismus langzeitig wirkender Elektrosmog nicht doch zu gesundheitlichen Beeinträchtigungen führt. Aus diesem Grund ist ein wirksamerer Schutz vor Elektrosmog wünschenswert.

Gemäß DE 101 22 472 B4 wird ein Putzmörtel mit einem Zuschlag mit elektromagnetischer Schirmwirkung versehen, wobei der Zuschlag Mangan-Zink-Ferrit-Pulver und Kohlenstoffpulver (C) beinhaltet. Bei diesem Kohlenstoffpulver handelt es sich um synthetischen Kohlenstoff wie Koks, wie er durch Verkokung kohlenstoffhaltiger Materialien wie beispielsweise Braunkohle, Steinkohle, Erdöl und Pech entsteht. Die Abschirmwirkung gegenüber dem Elektrosmog wird dabei hauptsächlich durch Reflexion der auftreffenden elektrischen, magnetischen oder elektromagnetischen Strahlung auf die elektrisch leitfähigen Bestandteile, hier hauptsächlich Ferrit und synthetischer Kohlenstoff erreicht.

Ein gattungsgemäßer Trockenmörtel ist aus EP 1 065 451 A2 bekannt. Dieser Trockenmörtel ist hydraulisch abbindend und enthält ein hydraulisches Bindemittel wie Zement. Allerdings kann die chemische Vernetzung des Binders beim Aushärten zu Rissbildung (Schwindungsrisse) führen. Diese Rissbildung stellt eine irreversible Störung des aus dem Trockenmörtel gefertigten Gefüges dar, die sich auch durch Zugabe von Wasser nicht mehr heilen lässt.

Gemäß KR 2002 0009249 A enthält eine Komposition aus einem Pulver aus lehmiger Erde, Kohlepulver und Jadepulver und einer Flüssigkeit ebenfalls einen Binder.

In DE 103 06 473 A1 werden Formkörper zur Herstellung von Bausteinen offenbart, welche Lehm, Graphit und Wasser sowie Bindestoffe wie Gips, Kalk oder Zement enthalten.

Gemäß DE 91 00 684 U1 werden Holzkohlepartikel mit Ton vermengt, um einen Leichtlehmmörtel herzustellen. Holzkohle stellt ein Gemisch anorganischer Verbindungen dar und weist zwar gute Wärmedämmeigenschaften, aber eine nur geringe Wärmeleitfähigkeit auf.

Der Erfindung liegt die Aufgabe zugrunde, einen Trockenmörtel zur Verfügung zu stellen, aus welchem Produkte gefertigt werden können, welche günstige Eigenschaften hinsichtlich der Abschirmung gegen Elektrosmog gewährleisten sowie eine gute Wärmeleitfähigkeit aufweisen. Weiterhin sollen aus dem Trockenmörtel gefertigte Produkte wie Gebäudebauelement, Wärmespeicher, Wärmetauscher, Spachtelmassen, flächige Platten oder Beläge, insbesondere Putz eine möglichst hohe Stabilität aufweisen.

Diese Aufgabe wird erfindungsgemäß durch die Merkmale der nebengeordneten Ansprüche gelöst.

### Technischer Hintergrund der Erfindung

Lehm ist ein Gemisch aus Ton, Schluff (Feinstsand) und Sand, das Beimengungen von Gesteinspartikeln (Kies, Gestein) sowie von organischem Material enthalten kann. Schluff, Sand und Kies unterscheiden sich von Ton darin, dass sie keine anderen Teilchen an sich binden können. In Lehm wirkt der Ton als Bindemittel, das die übrigen gröberen Partikel miteinander verbindet. Schluff, Sand und Kies sind also nur Füllstoffe. Je nachdem welcher der drei Hauptbestandteile beim Lehm überwiegt, spricht man von einem tonigen, schluffigen oder sandigen Lehm. Die Bindekraft eines Baulehms ist von Art und Anteil des Tons abhängig. Nach ihrer Bindekraft werden Baulehme z.B. als "mager" oder "fett" bezeichnet.

Im Folgenden sollen unter dem Begriff "Lehm" sämtliche Ausprägungen dieses natürlichen Materials berücksichtigen, die vor allem durch die Abbauregion geprägt werden. Die Regionen der Lehmvorkommen bestimmen insbesondere den Einfluss der Zusammensetzung des Lehms bezüglich der Hauptbestandteile Ton, Sand und Schluff. Der Anteil dieser Bestandteile bewirkt etwas unterschiedliche makroskopische Eigenschaften des Werkstoffes Lehm und führt auch zu etwas unterschiedlichen Ausprägungen der Lehmeigenschaften bei der Zugabe von Additiven. Es kann bei diesem Naturprodukt notwendig sein, Zusatzstoffe beizugeben, um etwa bei einem aus Lehm erzeugten Lehmmörtel gleichbleibende Eigenschaften für gewährleisten zu können.

Lehmmörtel wird durch Mischen von Lehmtrockenmörtel mit einer Flüssigkeit wie Wasser gewonnen und dann zum Herstellen der Gebäudebauelemente, flächigen Platten oder Beläge wie etwa Putz verwendet, also insbesondere zum Verputzen von Decken und Wänden im Innenbereich oder im schlagregengeschützten Außenbereich von Gebäuden oder Bauwerken. Der Lehmtrockenmörtel kann mit Sand, Stroh oder anderen pflanzlichen Faserstoffen abgemagert werden. Die Faserstoffe haben armierende Wirkung.

In den meisten alten Gebäuden, die in kalkarmen Regionen errichtet wurden, findet sich Lehm, etwa in Fachwerkhäusern zumindest in Innenwänden als Lehmputz. Seit Anfang der 1980er Jahre wird Lehmputz hauptsächlich im Innenbereich von Gebäuden als Wandputz eingesetzt. Zu den besonders vorteilhaften Eigenschaften des Lehmputzes gehört, dass Lehm relativ schnell Luftfeuchtigkeit aufnehmen und diese bei Bedarf wieder abgeben kann. Dadurch reguliert Lehmputz die Feuchtigkeit der Raumluft und trägt somit zu einem gesunden Raumklima bei. Weiterhin ist die Eigenschaft von Lehm bzw. Lehmputz bekannt, Wärme gut speichern zu können, was ebenfalls zu einer Verbesserung des Wohnklimas beiträgt.

Naturgraphit ist eine der natürlichen Erscheinungsformen des chemischen Elements Kohlenstoff in Reinform. Es kristallisiert meist im hexagonalen, selten auch im trigonalen Kristallsystem.

Aus der DE 66804 C ist die Herstellung geblähter Graphitpartikel durch die thermische Zersetzung einer Graphiteinlagerungsverbindung bekannt, wie sie beispielsweise durch Einwirkung konzentrierter Schwefelsäure auf Naturgraphit erhalten wird. Dieser geblähte Graphit- im Folgenden als expandierter Graphit bezeichnet - ist sehr gut formbar und weist eine große spezifische Oberfläche auf. Die Formbarkeit, die Festigkeit und die Elastizität des expandierten Graphits wird wesentlich durch den Grad der Expansion bestimmt, worunter die Ausdehnung der Graphitpartikel in Richtung der c-Achse des Graphitkristalls zu verstehen ist, die auch über die Volumenzunahme einer Partikelschüttung quantifiziert werden kann.

Auch aus der US-A-3 404 061 ist die Herstellung von expandiertem Graphit (Graphitexpandat, Blähgraphit) bekannt. Dafür werden Graphiteinlagerungsverbindungen bzw. Graphitsalze, z.B. Graphithydrogensulfat oder Graphitnitrat schockartig erhitzt. Dabei vergrößert sich das Volumen der Graphitpartikel um den Faktor 200 bis 400 und die Schüttdichte sinkt auf 2 bis 20 g/l. Das so erhaltene Graphitexpandat besteht aus wurm- oder ziehharmonikaförmigen, sperrigen Aggregaten.

Aufgrund der Schichtgitterstruktur von Naturgraphit können Atome oder kleine Moleküle zwischen die Kohlenstoff-Schichten eingelagert (interkaliert) werden. Dadurch entsteht aus Naturgraphitmahlgut sogenanntes Graphitsalz, das auch als Blähsalz, bzw. expansionsfähige Graphitinterkalationsverbindung oder GIC (Graphite Intercalation Compound) bezeichnet wird. Hochwertige Graphitsalze weisen einen großen Anteil an interkalierten Schichten auf. Bei den eingelagerten Molekülen handelt es sich meist um Schwefel-, Phosphor- oder Stickstoffverbindungen. Unter Hitzeeinwirkung werden die Schichten durch Thermolyse ziehharmonikaartig auseinander getrieben, das interkalierte Graphitmahlgut expandiert zu Graphitflocken.

Die Eigenschaften des Graphitsalzes, d. h. die Starttemperatur und das Blähvermögen, werden hauptsächlich von der Interkalationsgüte, d. h. wie viele der basisparallelen Schichten wurden interkaliert und vom Interkalationsmittel bestimmt. Je nach Blähgraphitsorte kann die Expansion der eingelagerten Interkalationsverbindung im Bereich von ca. 150 °C bis 900 °C stattfinden und nahezu schlagartig erfolgen.

Bei freier Expansion kann das Endvolumen das Mehrhundertfache des Ausgangsvolumens erreichen (meist 200- bis 400-faches Volumen). Die im Ergebnis der thermischen Expansion erhaltenen würmchen- oder ziehharmonikaförmigen Partikel (Graphitexpandat, Graphitflocken) sind deshalb sehr voluminös. Die Schüttdichte von Graphitexpandat ist mit 2 bis 20 g/l sehr gering.

Wenn eine elektromagnetische Welle auf ein in Bezug zu Hochfrequenzstrahlung dämpfendes Element trifft, wie beispielsweise eine Gebäudewand, so tritt sie mit verringerter Intensität auf der anderen Seite aus. Diese Verringerung der Intensität ist im Wesentlichen auf zwei Ursachen zurückzuführen. Zum einen wird ein Teil der Welle von der Gebäudewand reflektiert, zum andern wird ein Teil der Welle in der Gebäudewand absorbiert und in Wärme umgewandelt.

An sehr gut leitenden Metallen erfolgt meist eine Totalreflexion der elektromagnetischen Wellen, während massive Baustoffe von Natur aus einen gewissen Absorptionsgrad aufweisen.

### Offenbarung der Erfindung

Die Erfindung basiert auf dem Gedanken, dass ein Trockenmörtel zur Herstellung von Gebäudebauelementen, Wärmetauschern, Wärmespeichern, flächigen Platten oder Belägen wie Putzen ausschließlich aus Lehmtrockenmörtel und einem Zuschlagstoff ausschließlich aus Naturgraphit, expandiertem Graphit und/oder Ruß besteht, derart, dass für den Trockenmörtel nur natürliche Stoffe, nämlich Ton, Schluff, Sand und Naturgraphit, expandierter Graphit und/oder Ruß verwendet werden. Aus dem erfindungsgemäßen Trockenmörtel gefertigte Produkte werden im Folgenden deshalb auch als "graphitmodifizierte Lehmprodukte" bezeichnet.

Zum einen schirmt Lehm hochfrequente Strahlung z.B. von Mobilfunknetzen, schnurlosen Telefonen, UMTS und GPS besser ab als andere massive Baustoffe, d.h. Lehm weist bereits ohne abschirmende Zuschlagstoffe eine gewisse Abschirmwirkung auf. Denn bei dem fertigen Gebäudebauelement, Platte oder Belag sorgt die im Lehm gespeicherte Feuchtigkeit, der wie oben bereits erwähnt, diesbezüglich eine hohe Speicherkapazität aufweist, dafür, dass die Abschirmwirkung weniger durch Reflexion sondern in hohem Maße durch Absorption erreicht wird. Die im Lehm bzw. in einem Lehmputz gebundene Feuchtigkeit begünstigt daher die vorteilhafte Absorption der kinetischen Energie des Elektrosmogs. In diesem Zusammenhang ist auch die Verwendung von Naturgraphit bzw. expandiertem Graphit als einziger abschirmender Zuschlagstoff vorteilhaft, weil ein solcher mehr und schneller Luftfeuchtigkeit binden kann als etwa ein synthetischer Graphit oder ein synthetischer Kohlenstoff.

Das hohe Feuchtigkeitsspeichervermögen eines Lehm und Naturgraphit bzw. expandiertem Graphit beinhaltenden Gebäudebauelements oder Belags wie Putz begünstigt, dass ein großer Teil der in der elektrischen, magnetischen oder elektromagnetischen Strahlung vorhandenen kinetischen Energie nicht reflektiert, sondern sehr schnell absorbiert und in Wärmeenergie umgewandelt wird. Dieser hohe Absorptionsgrad resultiert auch in einer wesentlich geringeren Ausbildung von Interferenzen, welche durch den reflektierten Anteil der Strahlung entstehen.

Gegenüber Belägen, Beschichtungen oder Putzen, in welche zur Elektrosmogabschirmung etwa Karbonfasern eingemischt werden und welche deshalb in mehreren Lagen in unterschiedlichen Richtungen aufgetragen werden müssen (je Lage richtungsgebunden), um eine einigermaßen regelmäßige Gitterstruktur der lagengebundenen Karbonfasern und durch die Gitterstruktur eine gewisse Abschirmwirkung zu erzielen, hat der erfindungsgemäße Trockenmörtel den Vorteil einer einfacheren Verarbeitung. Mithin ist eine hinsichtlich der Auftragsrichtung frei aufgetragene Putzschicht, beispielsweise als Dünnputz ausreichend. Daneben ist das Feuchtigkeitsaufnahmevermögen von Karbonfasern gegenüber Naturgraphit, expandiertem Graphit bzw. Ruß geringer, so dass auch der Absorptionsgrad in Bezug auf die Strahlung geringer ausfällt.

Weiterhin weist Naturgraphit, expandierter Graphit oder Ruß gegenüber synthetischem Kohlenstoff oder Karbonfasern eine relativ große Partikelgröße bzw. eine gröbere Struktur auf, so dass die hauptsächlich für die Abschirmung verantwortlichen Graphit- und/oder Russpartikel im Putz eine größere Fläche bzw. ein größeres Volumen einnehmen, was sich günstig auf die Abschirmung auswirkt.

Der schirmende Zuschlagstoff kann jegliches Mischungsverhältnis aus Naturgraphit, expandiertem Graphit und Ruß beinhalten, d.h., dass neben einem Zuschlagstoff, der ausschließlich Naturgraphit, expandierten Graphit oder Ruß als jeweils einzigen natürlichen Schirmbestandteil beinhaltet auch schirmende Zugschlagstoffe vorgesehen sind, in welchen Naturgraphit, expandierter Graphit und/oder Ruß jeweils anteilig vorhanden sind.

Nicht zuletzt hat Naturgraphit, expandierter Graphit oder Ruß hervorragende Wärmeleiteigenschaften, was bei einer Verwendung des erfindungsgemäßen Trockenmörtels vor allem zur Herstellung von Kaminbauelementen oder flächigen, mit Kanälen oder Leitungen für eine Wärmetauscherflüssigkeit versehenen Heiz- und/oder Kühlelementen von Vorteil ist, die zum Zweck der Heizung und/oder Kühlung von Innenräumen an Innenwänden und/oder Decken von Gebäuden angebracht werden.

Mit anderen Worten bieten Gebäudebauelemente, Wärmetauscher, Wärmespeicher, flächige Platten oder Beläge, Beschichtungen oder Putze, welche auf der Basis eines Trockenmörtels gefertigt sind, der Naturgraphit, expandierten Graphit oder Ruß und Lehmtrockenmörtel enthält, nicht nur eine sehr gute Abschirmung gegenüber Elektrosmog sondern auch sehr gute Wärmeleitungseigenschaften.

Durch die hohen Wärmeleitung lassen sich Außenwände und Fassaden bzw. Außenwand- und Fassadenplatten von Gebäuden, welche aus dem graphitmodifizierten Lehmprodukt gefertigt sind, solarthermisch nutzen, z.B. durch das Einbringen von Leitungen oder Kanälen für flüssige Wärmetauschermedien in eine dem aus graphitmodifizierten Lehmprodukt gefertigte Putzschicht oder durch das Herstellen von Bauelementen und Bausteinen aus dem graphitmodifizierten Lehmprodukt zum Bau von Außenwänden bzw. durch das Herstellen von Fassadenelementen, die neben der architektonischen auch zur solarthermischen Nutzung verwendet werden. Diese Bauelemente, Bausteine, Außenwand- und Fassadenplatten können bereits mit Leitungen aus Metall oder Kunststoff zur Leitung von Wärmetauschermedien (Wärmeleitlurries, Wasseremulsionen oder - suspensionen) versehen an die Baustelle geliefert oder an der Baustelle mit solchen ausgerüstet werden.

Mit aus dem erfindungsgemäßen Trockenmörtel gefertigten Bauelementen wie Platten oder Bausteinen (mit und ohne PCM-Infiltration) lassen sich zudem Wärmespeicher und Wärmetauscher bauen. Die Wärmespeicher können mit flüssigen Medien, die z.B. in Rohren, Leitungen oder Kanälen geführt werden oder mit gasförmigen Medien wie Luft be- und entladen werden. Ebenso lassen sich mit diesen Elementen auch Wärmetauscher bauen, insbesondere nach dem Kachelofen- oder Hypokaustenprinzip, die insbesondere für Luftwärmetauscher geeignet sind.

Insgesamt weisen daher aus dem erfindungsgemäßen Trockenmörtel hergestellte "graphitmodifizierte Lehmprodukte" wie Gebäudebauelemente, Wärmespeicher, Wärmetauscher, Spachtelmassen, flächige Platten oder Beläge wie Putze neben einer sehr guten Feuchtigkeitsregulierung, die ein günstiges und gesundes Raumklima schafft, eine sehr gute Wärmeleitfähigkeit sowie hervorragende Abschirmeigenschaften gegen Elektrosmog auf.

Besonders bevorzugt wird der Zuschlagstoff, welcher Naturgraphit, expandierten Graphits und/ oder Ruß beinhaltet, bereits in den Lehmtrockenmörtel beinhaltenden Trockenmörtel als handelbares Produkt eingemischt. Alternativ oder zusätzlich kann der Zuschlagstoff aber auch später dem bereits gehandelten Lehmtrockenmörtel beinhaltenden Trockenmörtel zugegeben werden, beispielsweise während des Anmischens des Trockenmörtels mit Flüssigkeit (Wasser).

Für die bevorzugte Anwendung, dass aus dem erfindungsgemäßen Trockenmörtel ein Putzmörtel hergestellt wird, kann daher von einem "Lehm-Putzmörtel" und fertig verarbeitet von einem "Lehmputz" gesprochen werden. Solche Lehmputze werden in der Regel vor Ort, d.h. an der Baustelle hergestellt und verarbeitet. Selbstverständlich ist es aber auch möglich ist, den aus dem erfindungsgemäßen Trockenmörtel hergestellten Lehmputz vorab auch industriell auf Fertigbauteile aufzubringen, insbesondere auf vorgefertigte Wände und Decken von Fertighäusern. Auch aus dem erfindungsgemäßen Trockenmörtel gefertigte Gebäudebauelemente wie Ziegel für Wände und Kamine bzw. Platten werden zum Einsatz an einer Baustelle meist vorgefertigt.

Weiterhin umfasst die Erfindung auch Gebäudebauelemente wie Bausteine, insbesondere Kaminbausteine, Spachtelmassen, Wärmetauscher, Wärmespeicher, flächige Platten oder flächige Beläge, insbesondere Putze, welche auf der Basis des erfindungsgemäßen Trockenmörtels hergestellt sind, sowie Bauwerke, welche mit wenigstens einem Gebäudebauelement, einer Spachtelmasse, einem Wärmetauscher, einem Wärmespeicher, einer flächigen Platte oder einem flächigen Belag wie einem Putz versehen sind, welche oder welcher auf der Basis des erfindungsgemäßen Trockenmörtels hergestellt ist. Dabei ist unter dem Begriff "Bauwerk" jegliches Bauwerk zu verstehen, also neben einem Gebäude etwa auch eine Hütte oder ein gewerbliches Gebäude.

Es konnte nachgewiesen werden, dass Lehmprodukte durch Zugabe von Kohlenstoffpartikel in Form von Naturgraphit, expandiertem Graphit und/oder Ruß in Bezug auf Wärmeleitfähigkeit und Abschirmwirkung gegenüber elektromagnetischer Strahlen deutlich verbessert werden.

Die vom Anmelder durchgeführten Messungen zeigen sehr gute Ergebnisse insbesondere beim Strahlenschutz. Hervorzuheben ist hierbei, dass die Abschirmwirkung bereits bei niedrigen Mengen im Bereich von 5 Gew. % bis 25 Gew. % erreicht werden, bei Wand-, Platten-, Bauelement- oder Putzdicken der durch den Trockenmörtel gefertigten Produkte im Bereich von 4 mm bis 14 mm, wobei das graphitmodifizierte Lehmprodukt wie die Wand, das Bauelement oder der Putzbelag etwa senkrecht zur Strahlung angeordnet ist. Jedoch ist die Dicke des graphitmodifizierten, durch den erfindungsgemäßen Trockenmörtel gefertigten Lehmprodukts nicht auf die obigen Werte beschränkt, sie kann vielmehr zumindest einen Bereich von 0,5 mm bei einer sehr dünnen Belagschicht bis 500 mm bei einem Baustein betragen.

Unter aus dem erfindungsgemäßen Lehmtrockenmörtel beinhaltenden Trockenmörtel gefertigte Produkte fallen auch Verbundbauteile. Bei diesen Lehm-Verbundbauteilen handelt es sich z.B. um graphitmodifizierte Lehmplatten, oder Lehmbausteine bzw. -elemente, die aufgrund der Anwendung z.B. mit schall- oder wärmedämmenden Produkten wie Steinwoll- oder Schaumstoffplatten kaschiert oder mit z. B. Dampfsperren aus polymeren Folien versehen werden. Weiterhin ist eine Veredelung der Lehmprodukte, wie z.B. eine Kaschierung von graphitmodifizierten Lehmplatten mit Papier oder Karton, wie dies z.B. bei Gipskartonplatten der Fall ist, ebenso möglich wie das ganz oder teilweise Aufbringen von metallischen, polymeren oder textilen Farben, Folien oder Platten.

Die graphitmodifizierten Lehmprodukte können auch zu Montagezwecken oder je nach Anwendung mit Vertiefungen, Aussparrungen, Bohrungen, Hinterschneidungen, Nuten oder Abkantungen versehen werden oder z.B. metallische Elemente wie Winkel und/oder Leisten ein- oder aufgebracht werden.

Weiterhin kann vorgesehen sein, dass auf oder in die graphitmodifizierten Lehmprodukte weitere Elemente wie z.B. Leitungen oder Rohrverbindungen auf- oder eingebracht werden. Hierdurch lassen sich z.B. innerhalb und außerhalb eines Gebäudes Flächentemperiersysteme mit flächigen und plattenförmigen Heiz- und/oder Kühlelementen für Wände und Decken fertigen. Die dann aus dem erfindungsgemäßen Trockenmörtel gefertigten plattenförmigen Heiz- und/oder Kühlelemente können beispielsweise an Innenwänden und/oder Decken von Gebäuden angebracht sein, wobei in ihnen Kanäle oder Leitungsabschnitte aufgenommen oder ausgebildet sind, in welchen eine Wärmetauscherflüssigkeit zirkuliert, um Wärme an Räume abzugeben bzw. von diesen aufzunehmen. Die Herstellung solcher Flächentemperiersysteme kann auch vor Ort erfolgen, insbesondere beim Auftragen eines graphitmodifizierten Lehmputzes auf eine Innenwand oder Decke, in dem während des Auftragens ein Rohr- oder Leitungssystem in den Putz oder in eine Heiz- und/oder Kühlplatte eingebracht wird.

Zur Erhöhung der Wärmespeicherfähigkeit der graphitmodifizierten Lehmprodukte kann auch vorgesehen sein, sie mit jeglicher Art von Phasenwechselmaterialien (PCM), wie z.B. Paraffine oder Salzhydrate zu infiltrieren. Die Infiltration kann hierbei sowohl durch Zugabe des PCM bei der Herstellung des graphitmodifizierten Lehmprodukts erfolgen, als auch zuvor, durch eine Infiltration des Trockenmörtels und/oder des graphitbasierten Zuschlags.

Insgesamt ergeben sich für aus dem erfindungsgemäßen Trockenmörtel gefertigte und für Gebäude eingesetzte graphitmodifizierten Lehmprodukte folgende Vorteile:
- Wohngesundes Klima durch schnelle Feuchtigkeitsaufnahme und -abgabe sowie hohes Feuchtigkeitsaufnahmevermögen der Naturprodukte Graphit und Lehm
- Raumklimatische Vorteile durch Aufnahme von Gerüchen,
- Wohnkomfort durch die Reduktion von Schimmelpilzbildung, und
- im Falle eines Lehmputzes: Lebendiges Erscheinungsbild mit angenehmer Haptik sorgt für eine natürlich-ästhetische Wandgestaltung.

Durch die in den Unteransprüchen aufgeführten Maßnahmen sind vorteilhafte Weiterbildungen und Verbesserungen der in den unabhängigen Ansprüchen angegebenen Erfindung möglich.

Bevorzugt liegt die Partikelgröße des Naturgraphits, des expandierten Graphits und/oder des Rußes und in einem Bereich von 1 µm bis 10 mm, insbesondere in einem Bereich von 180 µm bis 1,2 mm.

Die Menge des Zuschlagstoffs liegt beispielsweise in einem Bereich von 1 Gew. % bis 75 Gew. % bezogen auf das Gesamtgewicht des Trockenmörtels, besonders bevorzugt in einem Bereich von 5 Gew. % bis 25 Gew. % bezogen auf das Gesamtgewicht des Trockenmörtels.

Weitere die Erfindung verbessernde Maßnahmen werden nachstehend gemeinsam mit der Beschreibung eines bevorzugten Ausführungsbeispiels der Erfindung dargestellt.

### Beschreibung eines Ausführungsbeispiels

Bei einem Zuschlagstoff zu einem Lehmmörtel beinhaltenden Trockenmörtel handelt es sich um reine Naturprodukte wie Graphit oder Ruß aus dem Stein- und Braunkohleabbau.

Bei dem Graphit wird bevorzugt reiner Naturgraphit in Form von Mahlgut bzw. expandierter Graphit verwendet, der beispielsweise durch lediglich einen Verarbeitungsschritt aus Naturgraphit hergestellt wird. Expandierter Graphit stellt somit eine natürliche Veredelungsstufe von Naturgraphit dar.

Die Korngrößen des Graphits, Rußes oder expandierten Graphits liegt bevorzugt in einem Bereich zwischen 1 µm und 10 mm. Dabei werden beispielsweise keine nanoskaligen Kohlenstoffpartikel berücksichtigt und somit werden auch Ruße, die Korngrößen von kleiner 1 µm aufweisen, ausgeschlossen.

Dabei können insbesondere auch Mischungen aus unterschiedlichen Korngrößen des oben angeführten Korngrößenspektrums als Zuschlagstoff verwendet werden sowie jegliche Mischung aus Naturgraphit, expandiertem Graphit und Ruß, d.h., dass neben einem Zuschlagstoff jeweils ausschließlich aus Naturgraphit, expandiertem Graphit oder Ruß auch ein Zugschlagstoff vorgesehen ist, in welchem Naturgraphit, expandierter Graphit und/oder Ruß anteilig vorhanden ist.

Die Menge des dem Lehmmörtel beinhaltenden Trockenmörtel zuzugebenden Zuschlagstoffs in Form von Kohlenstoffpartikeln aus reinem Naturprodukt (Naturgraphit, expandierter Graphit und/oder Ruß) und gegebenenfalls synthetischem Graphit liegt vorzugsweise im Bereich von 5 Gew. % bis 25 Gew. %. Möglich sind aber auch Zugabemengen im Bereich von 1 Gew. % bis 75 Gew. %, bezogen auf das Gesamtgewicht des Trockenmörtels, d.h. einschließlich dem Lehmtrockenmörtel und dem Zuschlagstoff aus natürlichem Graphit.

Gemäß einer bevorzugten Anwendung wird aus dem erfindungsgemäßen Lehmtrockenmörtel und den Zuschlagstoff beinhaltenden Trockenmörtel ein Lehmputz mit gegenüber Elektrosmog abschirmenden Eigenschaften gefertigt. Dieser Trockenmörtel beinhaltet beispielsweise folgendes (Angaben in Gewichtsprozent):
- gebrochenes natürliches Calciumcarbonat (CaCO₃) (Korn- bzw. Partikelgrößen im Bereich > 0 mm und < 5 mm), wobei aber auch andere geeignete Sande in Frage kommen,
   68,0 - 78,0 Gew.%
- getrockneter gemahlener Lehm / Ton / Löss / plastische Tone /kaolinitische Tone
   18,0 - 28,0 Gew.%
- expandiertes Graphitpulver (Partikelgröße 180 ― 1200 µm)
   6,0 - 12,0 Gew.%

Je nach Art der Tone und der Sande können die Anteile innerhalb der angegebenen Mengenbereiche variieren. Dabei spielt auch die Dicke der aufzubringenden Lehmputzschicht eine Rolle. Fette, also tonreiche Lehmputze neigen beim Trocknen zur Rissbildung bei starken Schichtdicken. Dünnlagige Lehmputze können daher fetter (mit höherem Tonanteil) gemischt werden.

Die oben angegebenen Bestandteile sind getrocknet und zunächst voneinander getrennt und werden in einer geeigneten Mischmaschine (z.B. Tellerzwangsmischer) vermischt und anschließend als fertiger Trockenmörtel in Säcke verpackt. Der Trockenmörtel kann dann baustellenseits mit Wasser angemischt und dann sofort zu einem graphitmodifizierten Lehmprodukt wie einem Gebäudebauelement, einem Baustein, einer Platte oder einem Putzbelag verarbeitet werden.

## Patentansprüche

1. Trockenmörtel zur Herstellung von Gebäudebauelementen, Wärmespeichern, Wärmetauschern, Spachtelmassen, flächigen Platten oder Belägen wie Putzen, welcher wenigstens einen Zuschlagstoff enthält, wobei er wenigstens einen Anteil an Lehmtrockenmörtel und als Zuschlagstoff Naturgraphit, expandiertes Graphit und/oder Ruß beinhaltet, **dadurch gekennzeichnet, dass** er ausschließlich aus Lehmtrockenmörtel und einem Zuschlagstoff ausschließlich aus Naturgraphit, expandiertem Graphit und/oder Ruß besteht, derart, dass für den Trockenmörtel nur natürliche Stoffe, nämlich Ton, Schluff, Sand und Naturgraphit, expandierter Graphit und/oder Ruß verwendet werden.

2. Trockenmörtel nach Anspruch 1, **dadurch gekennzeichnet, dass** die Partikelgröße des Naturgraphits, des expandierten Graphits und/oder des Rußes in einem Bereich von 1 µm bis 10 mm liegt.

3. Trockenmörtel nach Anspruch 2, **dadurch gekennzeichnet, dass** die Partikelgröße des Naturgraphits, des expandierten Graphits und/oder des Rußes in einem Bereich von 180 µm bis 1200 µm liegt.

4. Trockenmörtel nach Anspruch 2 oder 3, **dadurch gekennzeichnet, dass** der Zuschlagstoff unterschiedliche Korngrößen des Naturgraphits, des expandierten Graphits und/oder des Rußes beinhaltet.

5. Trockenmörtel nach einem der vorhergehenden Ansprüche, **dadurch gekennzeichnet, dass** die Menge des Zuschlagstoffs in einem Bereich von 1 Gew.% bis 75 Gew.% bezogen auf das Gesamtgewicht des Trockenmörtels liegt.

6. Trockenmörtel nach Anspruch 5, **dadurch gekennzeichnet, dass** die Menge des Zuschlagstoffs in einem Bereich von 5 Gew.% bis 25 Gew.% bezogen auf das Gesamtgewicht des Trockenmörtels liegt.

7. Gebäudebauelement, Wärmespeicher, Wärmetauscher, Spachtelmasse, flächige Platte oder Belag, insbesondere Putz, hergestellt auf der Basis eines Trockenmörtels nach einem der vorhergehenden Ansprüche.

8. Bauwerk oder Gebäude, welches mit wenigstens einem Gebäudebauelement, einem Wärmespeicher, einem Wärmetauscher, einer Spachtelmasse, einer flächigen Platte oder einem Belag wie einem Putz nach Anspruch 7 versehen ist.

## Claims

1. Dry mortar for the manufacturing of building components, heat accumulators, heat exchangers, fillers, two-dimensional slabs or coatings such as plaster containing at least one additive, wherein it comprises at least a portion of dry clay mortar and as additive natural graphite, expanded graphite, and/or soot, **characterized in that** it consists exclusively of dry clay mortar and an additive exclusively of natural graphite, expanded graphite and/or soot, such that for the dry clay mortar only natural material, namely clay, silt, sand, and natural graphite, expanded graphite, and/or soot is used.

2. Dry mortar according to claim 1, **characterized in that** the particle size of the natural graphite, the expanded graphite and/or the soot is within a range of 1 µm to 10 mm.

3. Dry mortar according to claim 2, **characterized in that** the particle size of the natural graphite, the expanded graphite, and/or the soot is within a range of 180 µm to 1200 µm.

4. Dry mortar according to claims 2 or 3, **characterized in that** the additive contains different grain sizes of the natural graphite, the expanded graphite, and/or the soot.

5. Dry mortar according to one of the preceding claims, **characterized in that** the amount of the additive is within a range of 1 % per weight to 75 % per weight with respect to the total weight of the dry mortar.

6. Dry mortar according to claim 5, **characterized in that** the amount of the aggregate is within a range of 5 % per weight to 25 % per weight with respect to the total weight of the dry mortar.

7. Building component, heat accumulator, heat exchanger, filler, two-dimensional slab or coating, in particular plaster, manufactured based on a dry mortar according to one of the preceding claims.

8. Building or edifice provided with at least one building component, heat accumulator, heat exchanger, filler, two-dimensional slab or coating such as plaster according to claim 7.

## Revendications

1. Mortier sec destiné à la fabrication d'éléments de construction d'immeubles, d'accumulateur de chaleur, d'échangeurs thermiques, de mastic, de dalles ou de couvres mur tel des crépis, contenant une matière supplémentaire et au moins une partie de mortier sec à l'argile et comme matière supplémentaire du graphite naturel, du graphite expansé et/ou de la suie, **caractérisé en ce qu'**il consiste exclusivement en mortier sec à l'argile et en une matière supplémentaire exclusivement en graphite naturel, graphite expansé et/ou en suie, de façon à ce que seulement des matières naturelles, telle que de l'argile, du limon, du sable et du graphite naturel, du graphite expansé et/ou de la suie sont utilisés pour la réalisation de ce mortier sec.

2. Mortier sec selon la revendication 1, **caractérisé en ce que** la taille des particules du graphite naturel, du graphite expansé et/ou de la suie est situé entre 1µm et 10µm.

3. Mortier sec selon la revendication 2, **caractérisé en ce que** la taille des particules du graphite naturel, du graphite expansé et/ou de la suie est situé entre 180µm et 1200µm.

4. Mortier sec selon la revendication 2 ou 3, **caractérisé en ce que** la matière supplémentaire contient des tailles de grains différentes du graphite naturel, du graphite expansé et/ou de la suie.

5. Mortier sec selon une des revendications précédentes, **caractérisé en ce que** la quantité de la matière supplémentaire est située dans une gamme allant de 1% en poids à 75% en poids par rapport au poids total du mortier sec.

6. Mortier sec selon la revendication 5, **caractérisé en ce que** la quantité de la matière supplémentaire est située dans une gamme allant de 5% en poids à 25% en poids par rapport au poids total du mortier sec.

7. Elément de construction d'immeuble, accumulateur de chaleur, échangeur thermique, mastic, dalle ou couvre mur, en particulier crépie, fabriqué sur la base d'un mortier sec selon une des revendications précédentes.

8. Construction ou immeuble, muni au moins d'un élément de construction d'immeuble, d'un accumulateur de chaleur, d'un échangeur thermique, d'un mastic, d'une dalle ou d'un couvre mur tel du crépis selon la revendication 7.
